Europäisches Patentamt

(19) European Patent Office

Office européen des brevets

(11) Publication number:

**0 043 626**
**B1**

(12) **EUROPEAN PATENT SPECIFICATION**

(45) Date of publication of patent specification: **28.11.84**

(21) Application number: **81200755.7**

(22) Date of filing: **02.07.81**

(51) Int. Cl.³: **B 62 D 13/02,** B 60 P 3/22,
B 62 D 7/04, B 60 G 11/46,
B 60 G 11/28

㉔ **Bogie.**

(30) Priority: **03.07.80 NL 8003856**

(43) Date of publication of application:
**13.01.82 Bulletin 82/02**

(45) Publication of the grant of the patent:
**28.11.84 Bulletin 84/48**

(84) Designated Contracting States:
**AT BE CH DE FR GB IT LI LU NL SE**

(56) References cited:
**DE-B-1 078 882**
**NL-A-7 805 645**
**NL-A-7 805 646**
**US-A-2 874 956**
**US-A-2 955 814**
**US-A-4 000 913**

(73) Proprietor: **Welgro B.V.**
**Parallelweg 18**
**NL-7141 DC Groenlo (NL)**

(72) Inventor: **Wellink, Theodorus Antonius**
**No. 1, Hobbemastraat**
**NL-7141 XD Groenlo (NL)**

(74) Representative: **Cammel, Willem Frans et al**
**OCTROOIBUREAU ARNOLD & SIEDSMA No. 1,**
**Sweelinckplein**
**NL-2517 GK The Hague (NL)**

Courier Press, Leamington Spa, England.

## Description

The invention relates to a bogie for a vehicle according to the preamble of claim 1.

· Such a bogie is known from NL—A—7805645. In this application a vehicle is shown, having a conduit extending under the vehicle. This conduit is arranged between the bogie and the upper structure of the vehicle.

For vans the height of the centre of gravity is an important factor with respect to safety. In particular, the risk of toppling over in bends strongly increases with an increase in height of the centre of gravity.

With the known bogies of the kind set forth a low level of the centre of gravity cannot be obtained, because the rotary bearing of the frame and hence the entire bogie has to be located below all members extending in the longitudinal direction on account of the space required for the swinging of the frame.

The invention has for its object to provide a bogie of the kind set forth, which can be employed in a manner such that the vehicle equipped with it has a safe, low centre of gravity.

This is achieved in that the axle suspension members comprise supporting arms, connected with the frame by at least one spacer bridging the height occupied by the elongate member and providing space for the elongate member, and in that the wheel axle is mounted on the upper side of the supporting arms. It is thus possible to cause the elongate member to extend through the bogie and keep the overall structural height of the bogie small, so that the superstructure can be arranged at a lower level and accordingly obtain a small height of the centre of gravity.

In a further advantageous embodiment of the bogie according to the invention, each supporting arm co-operates with an air spring and has a supporting surface for the air spring located below the level of a supporting surface for the wheel axle. With this measure, the air spring is not a limiting factor in obtaining a reduced structural height of the bogie.

Further features and advantages of the invention will be apparent from the following description of an embodiment with reference to the drawings.

Fig. 1 is a partial plan view of a van comprising two bogies embodying the invention.

Fig. 2 is a partial side elevation of the van shown in Fig. 1 at the place of the bogies.

Fig. 3 is a sectional view taken on the line III—III in Fig. 2.

Fig. 4 is a perspective view of a bogie as shown in the preceding Figures, some parts being omitted for the sake of clarity.

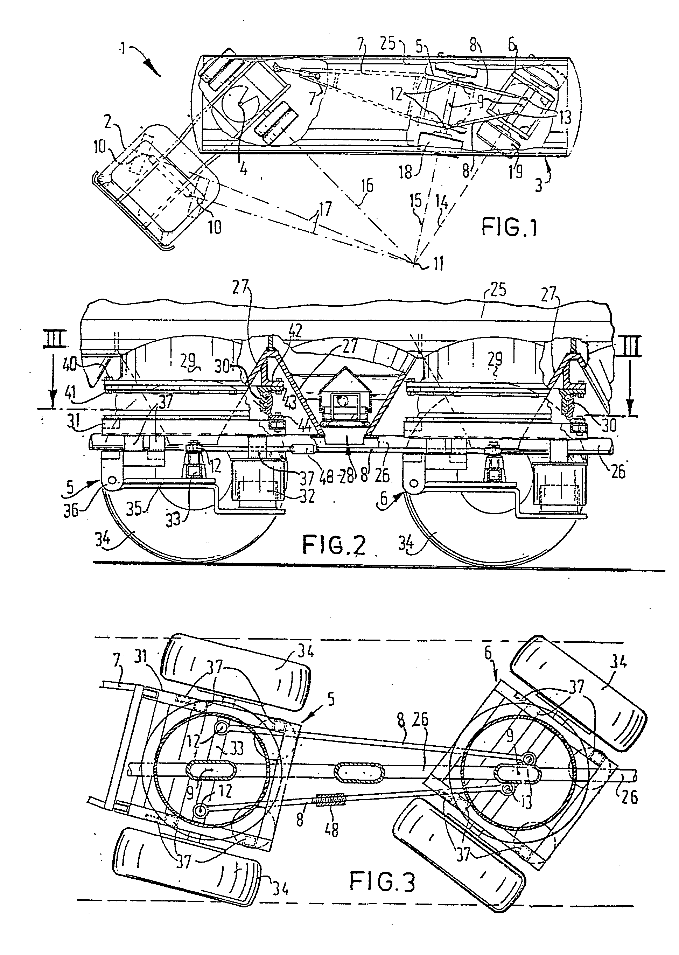

Fig. 1 shows a van 1 comprising a tractor 2 and a semi-trailer 3 coupled with the former by means of a so-called fifth wheel 4 in a pivotable manner. The semi-trailer 3 comprises two bogies 5 and 6 embodying the invention, which are rotatable about the rotary axles 9. The foremost bogie 5 is coupled by a pole 7 with the rear side of the tractor 2 and the hindmost bogie 6 is coupled with the foremost bogie 5 by means of control-rods 8. When the driver deflects the front wheels 10 of the tractor 2 to the left, as shown by way of example in Fig. 1, the tractor 2 will turn with respect to the semi-trailer 3. As a result the pole 7 is moved out of the middle position so that the bogie 5 will turn with respect to the semi-trailer 3. Owing to the coupling with the control-rods 8 the hindmost bogie 6 also turns. Dimensioning of the control-rods 8 and positioning of the coupling points 12, 13 of the control-rods 8 with the bogies 5 and 6 respectively are such that the axis 14 of the axle 19 of the bogie 6 intersects the axis 15 of the axle 18 of the bogie 5 approximately at the point of intersection 11 of the axes 16, 17 of the axles of the tractor 2. With this construction the axles 18, 19 are better capable of following the track of the tractor 2 so that the overall surface on the ground required for turning through a bend is materially smaller than in the case in which the semi-trailer 3 is provided with fixed, non-rotatable axles.

The semi-trailer 3 is formed by a tank wagon for bulk material and is provided, as is shown in Fig. 2, with a bulk conduit 26 extending beneath the tank 25.

It is noted here that the bulk material may be granular, for example, fodder, powdery, for example, flour of liquid, for example, milk. The bulk material can be conducted through the conduit 26 by gravity, like in the case of a liquid, or by air pressed through the conduit 26 and carrying the bulk material along.

The bulk conduit 26 communicates with funnels 27 on the underside of the tank 25. Each funnel 27 comprises a valve 28 controlling the feed of bulk material from the funnel 27 towards the conduit 26.

Fig. 2 shows that the tank 25 itself constitutes the supporting part of the semi-trailer. Around two of the funnels 27 is arranged a supporting frame 29. On the underside each supporting frame 29 has a flange 42, to which is fastened, by means of bolts 40 and nuts 41, a flange 43 of a rotatable crown 30. The rotatable crown 30 has, on the bottom side, a flange 44, which is also connected by bolts and nuts with a frame 31 of a bogie 5, 6. This frame 31 is thus capable of turning about a vertical centre line with respect to the funnel 27 concerned and to the tank 25.

The frame 31 is provided with a rigid axle 33 provided with wheels 34 by means of axle suspension members. In the embodiments shown the axle suspension members comprise supporting arms 35 pivotally connected with supporting-arm supports 36 and air springs 32. The axle 33 is connected in a manner known *per se* with the supporting arms 35, for example, by means of straps (not shown).

As is shown, the axle suspension members according to the invention are connected with the frame 31 through spacers 37. The spacers 37 have a height such that they bridge the height occupied by the elongate member i.e. the bulk conduit 26. Thus space is created for allowing the bogies to swing round without collision of the conduit 26 with, for example, the supporting-arm supports 36 or the air springs 32. This is apparent from Figs. 2 and 3.

One control-rod or both control-rods 8 include(s) a screw sleeve 48 for aligning the axles 33 of the bogies.

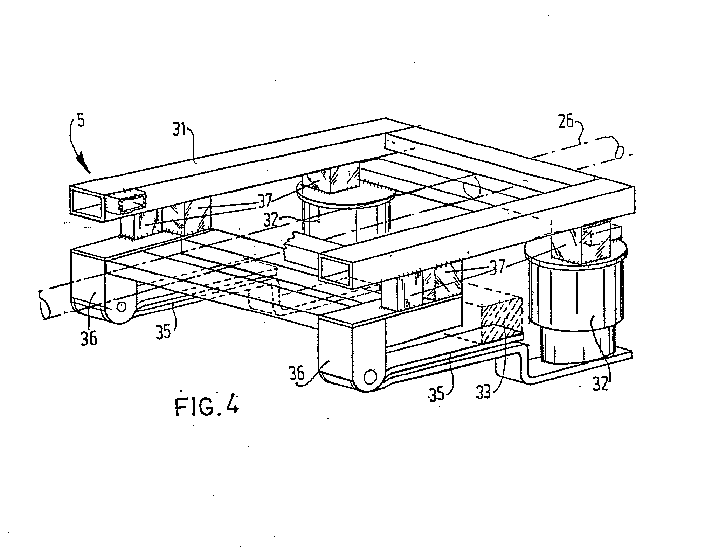

Fig. 4 shows a bogie 5 according to the invention without an axle. The disposition of the spacers is clearly shown. The supporting arms 35 have a substantially Z-shape so that the air spring 32 is located at a lower level, which results in sufficient space for the spacer 37. When a shock absorber is connected with the axle 33, it can also be coupled through a spacer 37 with the frame 31.

Although the Figures and the foregoing description are all concerned with a rigid wheel axle, it is possible in a different embodiment of the invention to use a swivel axle.

**Claims**

1. A bogie (5, 6) for a vehicle such as a tank wagon for transporting bulk material, comprising a frame (31) to be pivotal about a vertical axis and connected with a supporting part (25) of the vehicle (1) and at least one wheel axle (33) connected with the frame by axle suspension members (32, 35, 36), at least one elongate member (26, 8), for example, a conduit or a steering rod, extending under the vehicle essentially longitudinally with reference to the vehicle axis, characterized in that the axle suspension members comprise supporting arms (35), connected with the frame by at least one spacer (37) bridging the height occupied by the elongate member (26, 8) and providing space for the elongate member, and in that the wheel axle (33) is mounted on the upper side of the supporting arms (35).

2. A bogie as claimed in claim 1, characterized in that each supporting arm (35) cooperates with an air spring (32) and has a supporting surface for the air spring (32) located below the level of the supporting surface for the wheel axle (33).

**Revendications**

1. Un boggie (5, 6) pour un véhicule tel qu'une remorque citerne servant à transporter une matière en vrac, comprenant un châssis (31) conçu de manière à pouvoir être monté pivotant autour d'un axe vertical et assemblé à une partie support (25) du véhicule (1) et au moins un essieu (33) de roues assemblé au châssis par des organes (32, 35, 36) de suspension d'essieu, au moins un organe allongé (26, 8) par exemple un conduit ou une barre de direction s'étendant sous le véhicule, essentiellement longitudinalement par rapport à l'axe du véhicule, caractérisé en ce que les organes de suspension de l'essieu comprennent des bras supports (35) reliés au châssis par au moins un organe d'espacement (37) qui franchit la hauter occupée par l'organe allongé (26, 8) et fournit un espace libre pour l'organe allongé et en ce que l'essieu (33) de roues est monté sur le côté supérieur des bras supports (35).

2. Un boggie tel que revendiqué dans la revendication 1, caractérisé en ce que chaque bras support (35) coopère avec un ressort pneumatique (32) et comporte une surface support pour le ressort pneumatique (32) disposée au-dessous du niveau d'une surface support pour l'essieu (33) de roue.

**Patentansprüche**

1. Dreh- bzw. Untergestell (5, 6) für ein Fahrzeug, wie etwa einen Kessel- oder Tankwagen zum Transport von Schüttgut, mit einem Rahmen (31), der um eine senkrechte Achse schwenkbar und mit einem Trägerteil (25) des Fahrzeugs (1) verbunden ist, mindestens einer Radachse (33), die über Achsaufhängungsteile (32, 35, 36) mit dem Rahmen (31) verbunden ist, mindestens einem länglichen Teil (26, 8), beispielsweise einem Rohr oder einer Steuerstange, das sich unterhalb des Fahrzeugs im wesentlichen in Längsrichtung der Fahrzeugachse erstreckt, dadurch gekennzeichnet, daß die Achsaufhängungsteile Trägerarme (35) aufweisen, die mit dem Rahmen (31) mindestens über ein Abstandsstück (37) verbunden sind, das die von dem länglichen Teil (26, 28) eingenommene Höhe überbrückt und für dieses einen Bewegungsraum liefert, und daß die Radachse (33) auf der Oberseite der Trägerarme (35) befestigt ist.

2. Drehgestell nach Anspruch 1, dadurch gekennzeichnet, daß jeder Trägerarm (35) mit einer Luftfeder (32) zusammenwirkt und für diese eine Auflagefläche aufweist, die unterhalb der Auflagefläche für die Radachse (33) liegt.

FIG.1

FIG.2

FIG.3

FIG.4